# EUROPEAN PATENT APPLICATION

(11) **EP 4 518 224 A1**
(43) Date of publication of application: **05.03.2025**
(21) Application number: 23796785.6
(22) Date of filing: 26.04.2023
(51) Int. Cl.: H04L 5/00, H04W 72/23

(54) **METHOD FOR TRANSMITTING UPLINK SIGNAL, USER EQUIPMENT, PROCESSING DEVICE, STORAGE MEDIUM, AND METHOD AND BASE STATION FOR RECEIVING UPLINK SIGNAL**

(30) Priority: 28.04.2022 KR 20220053101; 09.05.2022 US 202263339963 P
(71) Applicant: LG Electronics Inc., Yeongdeungpo-gu Seoul 07336 (KR)
(72) Inventor: CHOI, Seunghwan, Seoul 06772 (KR); AHN, Joonkui, Seoul 06772 (KR); YANG, Suckchel, Seoul 06772 (KR); KIM, Seonwook, Seoul 06772 (KR)
(74) Representative: Maikowski & Ninnemann Patentanwälte Partnerschaft mbB
(86) International application number: PCT/KR2023/005661
(87) International publication number: WO 2023/211142

(57) **Abstract**

The RRC configuration including an UL transmission switching (UTS)-related configuration for a plurality of band pairs can be provided to a UE. The RRC configuration includes a band-pair-specific UTS option configuration for the plurality of band pairs. The UE can determine, on the basis of the UTS option configuration for the band pairs, whether conditions for UTS from one band to another band of the band pairs are satisfied. The UE can omit an UL transmission during a UL switching gap if the conditions are satisfied, and can perform UL transmissions without interruption if the conditions are not satisfied.

## Description

### TECHINICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

In general, regarding a UE, the number of antennas that can be installed in the corresponding UE is limited due to its size. For example, a UE with N transmission chains through N antennas may support up to N uplink transmissions. There is a need for a plan for supporting a UE having a limited number of transmission chains to effectively perform uplink transmission.

The objects to be achieved with the present disclosure are not limited to what has been particularly described hereinabove and other objects not described herein will be more clearly understood by persons skilled in the art from the following detailed description.

### Technical Solution

In one technical aspect of the present disclosure, provided is a method of transmitting an Uplink (UL) signal by a user equipment in a wireless communication system. The method may include receiving a Radio Resource Control (RRC) configuration including a UL transmission switching (UTS) related configuration for a plurality of band-pairs, receiving a first scheduling information for scheduling a first UL transmission on a first UL carrier in a first band of a first band-pair of a plurality of the band-pairs, receiving a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a UL transmission on the first carrier and the second carrier during a UL switching gap based on the conditions being met, and performing the first UL transmission and the second UL transmission without interruption based on the conditions not being met, wherein the RRC configuration may include a UTS option configuration per band-pair for a plurality of the band-pairs.

In another technical aspect of the present disclosure, provided is a user equipment transmitting an Uplink (UL) signal in a wireless communication system. The user equipment may include at least one transceiver, at least one processor, and at least one computer memory operably connected to the at least one processor and storing instructions causing the at least one processor to perform operations when executed, the operations including receiving a Radio Resource Control (RRC) configuration including a UL transmission switching (UTS) related configuration for a plurality of band-pairs, receiving a first scheduling information for scheduling a first UL transmission on a first UL carrier in a first band of a first band-pair of a plurality of the band-pairs, receiving a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a UL transmission on the first carrier and the second carrier during a UL switching gap based on the conditions being met, and performing the first UL transmission and the second UL transmission without interruption based on the conditions not being met, wherein the RRC configuration may include a UTS option configuration per band-pair for a plurality of the band-pairs.

In another technical aspect of the present disclosure, provided is an apparatus for processing in a wireless communication system. The apparatus may include at least one processor and at least one computer memory operably connected to the at least one processor and storing instructions causing the at least one processor to perform operations when executed, the operations including receiving a Radio Resource Control (RRC) configuration including a UL transmission switching (UTS) related configuration for a plurality of band-pairs, receiving a first scheduling information for scheduling a first UL transmission on a first UL carrier in a first band of a first band-pair of a plurality of the band-pairs, receiving a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a UL transmission on the first carrier and the second carrier during a UL switching gap based on the conditions being met, and performing the first UL transmission and the second UL transmission without interruption based on the conditions not being met, wherein the RRC configuration may include a UTS option configuration per band-pair for a plurality of the band-pairs.

In another technical aspect of the present disclosure, provided is a storage medium readable by a computer. The storage medium may store at least one computer program including instructions causing at least one processor to perform operations when executed. The operations may include receiving a Radio Resource Control (RRC) configuration including a UL transmission switching (UTS) related configuration for a plurality of band-pairs, receiving a first scheduling information for scheduling a first UL transmission on a first UL carrier in a first band of a first band-pair of a plurality of the band-pairs, receiving a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a UL transmission on the first carrier and the second carrier during a UL switching gap based on the conditions being met, and performing the first UL transmission and the second UL transmission without interruption based on the conditions not being met, wherein the RRC configuration may include a UTS option configuration per band-pair for a plurality of the band-pairs.

In another technical aspect of the present disclosure, provided is a computer program stored in a computer-readable storage medium. The computer program may include at least one computer program code including instructions causing at least one processor to perform operations when executed. The operations may include receiving a Radio Resource Control (RRC) configuration including a UL transmission switching (UTS) related configuration for a plurality of band-pairs, receiving a first scheduling information for scheduling a first UL transmission on a first UL carrier in a first band of a first band-pair of a plurality of the band-pairs, receiving a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a UL transmission on the first carrier and the second carrier during a UL switching gap based on the conditions being met, and performing the first UL transmission and the second UL transmission without interruption based on the conditions not being met, wherein the RRC configuration may include a UTS option configuration per band-pair for a plurality of the band-pairs.

In another technical aspect of the present disclosure, provided is a method of receiving an Uplink (UL) signal from a user equipment by a base station in a wireless communication system. The method may include transmitting a Radio Resource Control (RRC) configuration including a UL transmission switching (UTS) related configuration for a plurality of band-pairs, transmitting a first scheduling information for scheduling a first UL transmission on a first UL carrier in a first band of a first band-pair of a plurality of the band-pairs, transmitting a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a reception of a UL transmission on the first carrier and the second carrier during a UL switching gap based on the conditions being met, and receiving the first UL transmission and the second UL transmission without interruption based on the conditions not being met, wherein the RRC configuration may include a UTS option configuration per band-pair for a plurality of the band-pairs.

In another technical aspect of the present disclosure, provided is a base station receiving an Uplink (UL) signal from a user equipment in a wireless communication system. The base station may include at least one transceiver, at least one processor, and at least one computer memory operably connected to the at least one processor and storing instructions causing the at least one processor to perform operations when executed. The operations may include transmitting a Radio Resource Control (RRC) configuration including a UL transmission switching (UTS) related configuration for a plurality of band-pairs, transmitting a first scheduling information for scheduling a first UL transmission on a first UL carrier in a first band of a first band-pair of a plurality of the band-pairs, transmitting a second scheduling information for scheduling a second UL transmission following the first UL transmission on a second UL carrier in a second band of the first band-pair, determining whether conditions for UTS are met based on a UTS option configuration for the first band-pair, the first scheduling information, and the second scheduling information, omitting a reception of a UL transmission on the first carrier and the second carrier during a UL switching gap based on the conditions being met, and receiving the first UL transmission and the second UL transmission without interruption based on the conditions not being met, wherein the RRC configuration may include a UTS option configuration per band-pair for a plurality of the band-pairs.

In each aspect of the present disclosure, the UTS option configuration per the band-pair may include a first option value or a second option value.

In each aspect of the present disclosure, the user equipment may not be expected to perform UL transmissions simultaneously on bands of a band-pair related to the first option value.

In each aspect of the present disclosure, the base station may not be expected to receive UL transmissions simultaneously on bands of a band-pair related to the first option value.

In each aspect of the present disclosure, the user equipment may be allowed to perform UL transmissions simultaneously on bands of a band-pair related to the second option value.

In each aspect of the present disclosure, the base station may be allowed to receive UL transmissions simultaneously on bands of a band-pair related to the second option value.

In each aspect of the present disclosure, the method by the user equipment or the operations of the user equipment, the processing apparatus, or the storage medium may include: based on the UTS option configuration for the first band-pair having the first option value, determining that the conditions are met, based on the first band and the second band being different from each other.

In each aspect of the present disclosure, the method by the base station or the operations of the base station may include determining that the conditions are met based on the first band and the second band being different from each other on the basis that the UTS option configuration for the first band-pair has the first option value.

In each aspect of the present disclosure, the method by the base station or the operations of the base station may include, on the basis that the UTS option configuration for the first band-pair has the second option value, i) based on that the first band and the second band are the same, the first UL transmission is 1-port transmission, the second UL transmission is 2-port transmission, and the user equipment is in an operation state that the 2-port transmission is not supported on the same band or ii) based on that the first band and the second band are different, the first UL transmission is the 1-port transmission, the second UL transmission is the 1-port transmission, and the user equipment is in a state that the 2-port transmission is operating on a same carrier, determining that the conditions are met.

In each aspect of the present disclosure, the first carrier or the second carrier may include a carrier having a related UTS configuration.

The foregoing solutions are merely a part of the examples of the present disclosure and various examples into which the technical features of the present disclosure are incorporated may be derived and understood by persons skilled in the art from the following detailed description.

### Advantageous Effects

According to some implementation(s) of the present disclosure, a wireless communication signal may be efficiently transmitted/received. Accordingly, the total throughput of a wireless communication system may be raised.

According to some implementation(s) of the present disclosure, various services with different requirements may be efficiently supported in a wireless communication system.

According to some implementation(s) of the present disclosure, delay/latency generated during radio communication between communication devices may be reduced.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 7 is a diagram to describe the concept of uplink transmission switching;
FIG. 8 illustrates an example of a configuring process of uplink transmission switching;
FIG. 9 illustrates an example of a flow of UL signal transmission in a UE according to some implementations of the present disclosure; and
FIG. 10 illustrates an example of a flow of UL signal reception in a BS according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

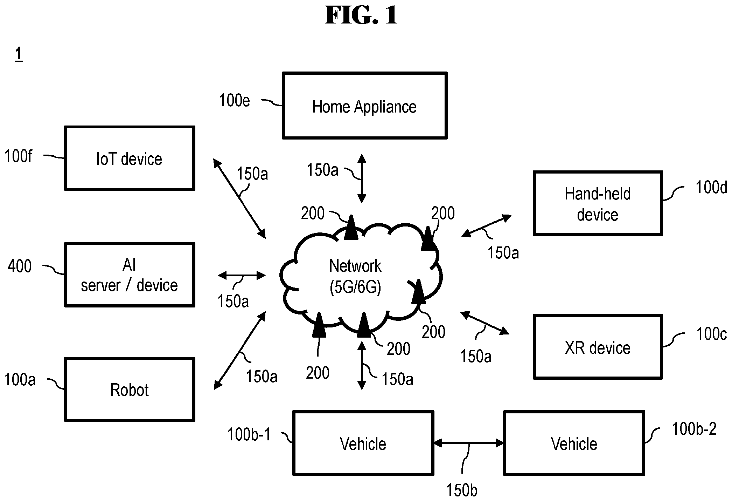

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2VyVehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

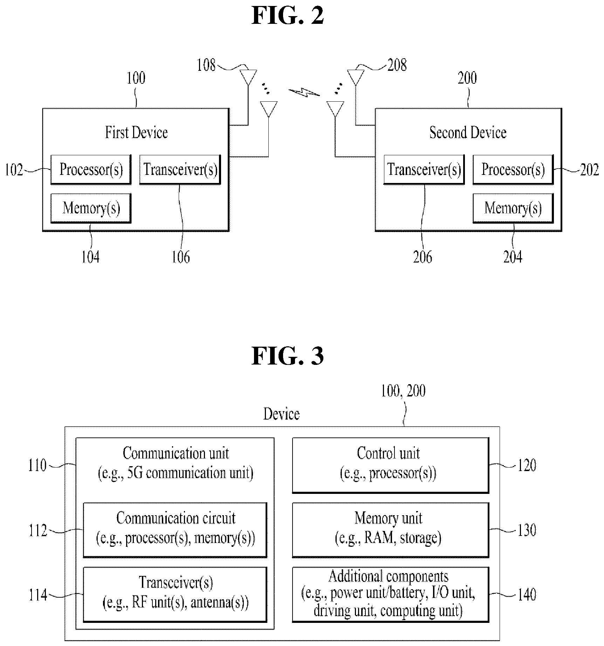

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

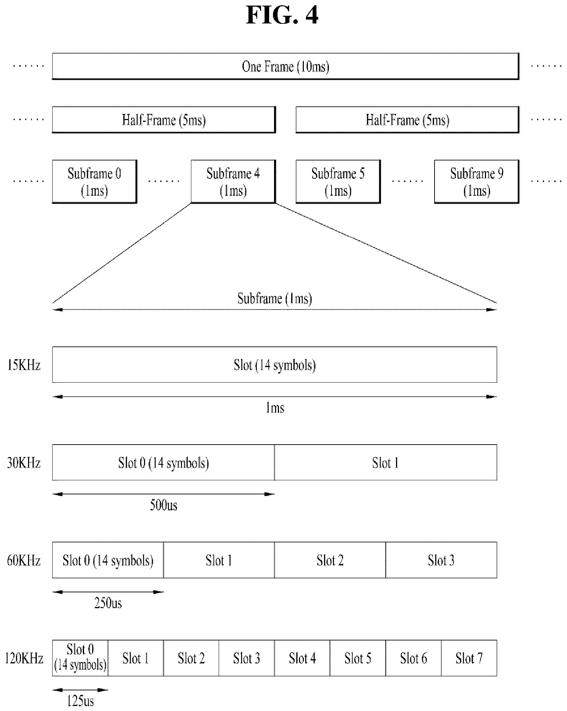

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*Nr/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on an SCS. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**[Table 1]**

| u | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the SCS △f = 2^{u}*15 kHz.

**[Table 2]**

| u | *N*^{slot}_{symb} | *N*^{frame,u}ₛₗₒₜ | *N*^{subframe,u}ₛₗₒₜ |
|---|---|---|---|
| 2 | 12 | 40 | 4 |

For an SCS configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., ₙ^{frame,u}ₛₗₒₜ - 1}.

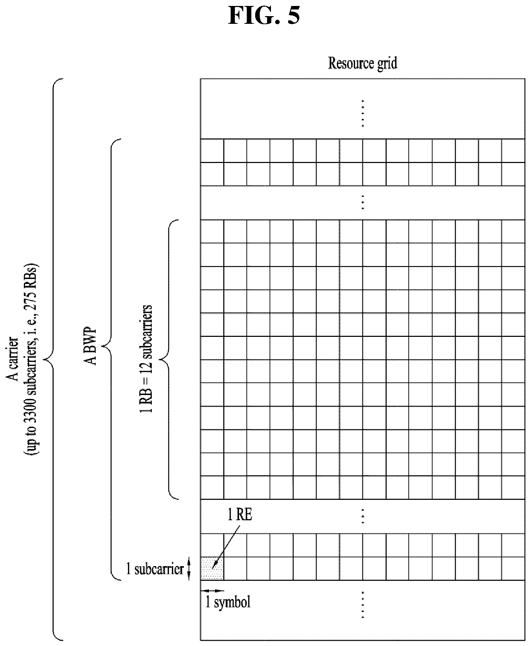

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subftame,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* an SCS configuration *u,* and a transmission link (DL or UL). The carrier bandwidth *N*^{size,u}_{grid} for the SCS configuration u is given to the UE by a higher layer parameter (e.g. RRC parameter). Each element in the resource grid for the antenna port *p* and the SCS configuration *u* is referred to as a resource element (RE) and one complex symbol may be mapped to each RE. Each RE in the resource grid is uniquely identified by an index k in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the SCS configuration u. The center of subcarrier 0 of CRB 0 for the SCS configuration u is equal to 'Point A' which serves as a common reference point for RB grids. The PRBs for subcarrier spacing configuration u are defined within a bandwidth part (BWP) and numbered from 0 to N^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP}= 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**[Table 3]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to an HARQ-ACK codebook. In particular, a bit sequence in which HARQ-ACK information bits are arranged according to a predetermined rule is called an HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). The table below shows the PUCCH formats. The PUCCH formats may be divided into short PUCCH formats (formats 0 and 2) and long PUCCH formats (formats 1, 3, and 4) according to PUCCH transmission length.

**[Table 4]**

| PUCCH format | Length in OFDM symbols N^{PUCCH}_{symb} | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

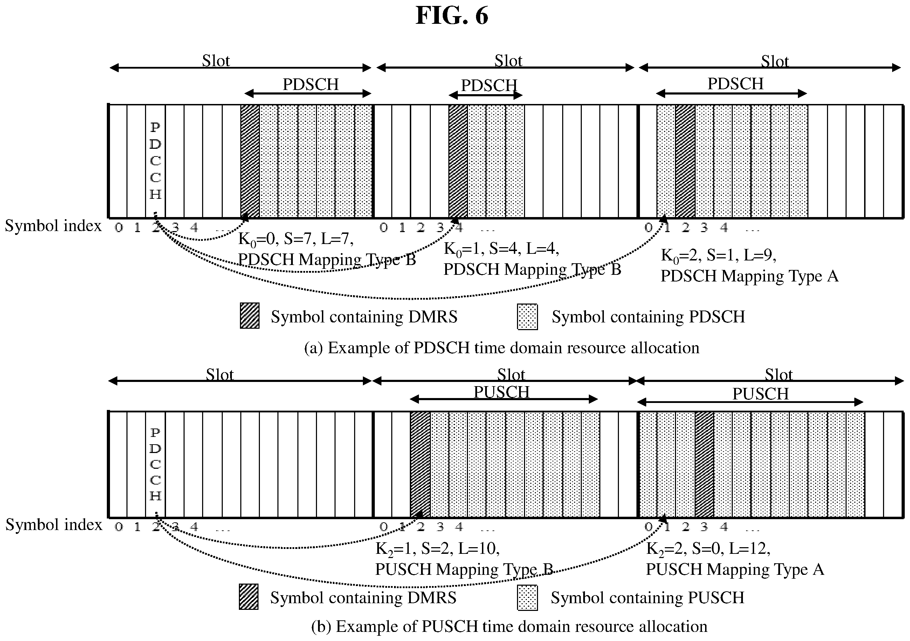

FIG. 6 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset Ko, a start and length indicator value *SLIV* (or directly, a start position (e.g., starting symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., starting symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the starting symbol S relative to the start of the slot with the PDSCH or PUSCH and the number of consecutive symbols, *L,* counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

A PDCCH is transmitted through a control resource set (CORESET). One or more CORESETs may be configured for the UE. The CORESET consists of a set of PRBs with a duration of 1 to 3 OFDM symbols. The PRBs and a CORESET duration that constitute the CORESET may be provided to the UE through higher layer (e.g., RRC) signaling. A set of PDCCH candidates in the configured CORESET(s) is monitored according to corresponding search space sets. In the present disclosure, monitoring implies decoding (called blind decoding) each PDCCH candidate according to monitored DCI formats. A master information block (MIB) on a PBCH provides parameters (e.g., CORESET#0 configuration) for monitoring a PDCCH for scheduling a PDSCH carrying system information block 1 (SIB1) to the UE. The PBCH may also indicate that there is no associated SIB1. In this case, the UE may be provided with not only a frequency range in which the UE may assume that there is no SSB associated with SSB1 but also other frequencies to search for an SSB associated with SIB1. CORESET #0, which is a CORESET for scheduling SIB1 at least, may be configured by the MIB or dedicated RRC signaling.

A set of PDCCH candidates monitored by the UE is defined in terms of PDCCH search space sets. The search space set may be a common search space (CSS) set or a UE-specific search space (USS) set. Each CORESET configuration is associated with one or more search space sets, and each search space set is associated with one CORESET configuration. The following table illustrates a DCI format that the PDCCH may carry.

**[Table 5]**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of PRB(s) and OFDM symbol(s) where UE cancels the corresponding UL transmission from the UE |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. For a CSS, DCI format 0_0 and DCI format 1_0 have fixed sizes after the BWP size is initially given by RRC. For a USS, DCI format 0_0 and DCI format 1_0 are fixed in size in fields other than a frequency domain resource assignment (FDRA) field, and the FDRA field may vary in size by configuration of a related parameter by the BS. In DCI format 0_1 and DCI format 1_1, the size of the DCI field may be changed by various RRC reconfigurations by the BS. DCI format 2_0 may be used to provide dynamic slot format information (e.g., SFI DCI) to the UE, DCI format 2_1 may be used to provide DL pre-emption information to the UE, and DCI format 2_4 may be used to indicate a UL resource on which the UE needs to cancel UL transmission.

In general, regarding a UE, the number of antennas that can be installed in the corresponding UE is limited due to its size. A UE with N transmission chains through N antennas may simultaneously support up to N 1-port UL transmissions or support up to a maximum N-port UL transmission. There is a need for a plan for supporting a UE having a limited transmission chain to effectively perform a UL transmission. Hereinafter, implementations of the present disclosure relating to UL transmission (Tx) switching are described. Since most UEs developed up to date support up to two Tx chains, implementations of the present disclosure are described below as the premise that a UE supports up to two Tx chains, i.e., a UL transmission through maximum two ports. However, implementations of the present disclosure are not limited to a 1- or 2-port UL transmission, and may also be applied to an N-port UL transmission, where N may be greater than 2.

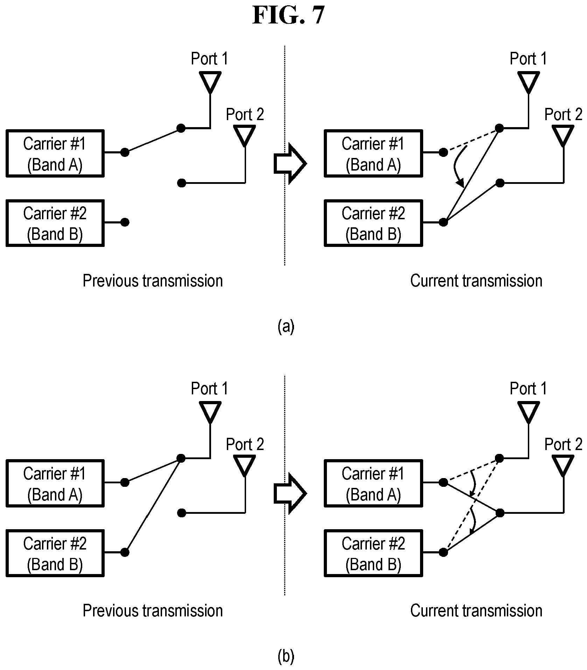

FIG. 7 is a diagram illustrating the concept of uplink transmission switching.

In order to increase throughput and efficiency of a UL transmission, in NR Rel-16 for the purpose of enabling a UE to effectively perform a 1-port UL transmission or a 2-port UL transmission using maximum two Tx chains, UL Tx Switching (UTS) for switching Tx chain(s) connected to UL carrier(s) under a specific condition has been defined. FIG. 7 (a) illustrates 1Tx-2Tx switching between two carriers/bands, and FIG. 7 (b) illustrates 2Tx-2Tx switching between two carriers/bands.

For example, after a UL transmission (hereinafter, previous transmission) has been performed with 1 Tx chain on carrier #1, when it is configured/indicated to perform a UL transmission (hereinafter, a current transmission) through 2 Tx chain on another carrier #2, a UE may switch the Tx chain previously connected to the carrier #1 to the carrier #2 so that a 2-port UL transmission is possible on the carrier #2. Such a UTS configuration and switching method may be applied to a band combination corresponding to Evolved-Universal Terrestrial Radio Access-New-Radio-Dual Connectivity (EN-DC) without a Supplementary UL (SUL), a standalone SUL, and an inter-band CA. In NR Rel-17, additional conditions have been introduced to extend the 1Tx-2Tx switching (i.e., switching between 1 Tx chain and 2 Tx chain) of the existing NR Rel-6 to the 2Tx-2Tx switching (i.e., switching between 2 Tx chain and 2 Tx chain), and at the same time, UTS between two carriers introduced in NR Rel-16 can be performed between two bands different from each other (e.g., between one carrier in one band and two contiguous carriers in the other band).

If specific conditions are met and a UE is configured as *uplinkTxSwitching* via RRC signaling, the UE may omit a UL transmission during an uplink switching gap N_{Tx1-Tx2}. For example, if specific conditions are met and a UE is configured as *uplinkTxSwitching* via RRC signaling, the UE omits all UL transmission(s) including a UL transmission scheduled via DCI and a UL transmission (e.g. configured grant based PUSCH) configured by higher layer signaling during an uplink switching gap N_{Tx1-Tx2}. The switching gap N_{Tx1-Tx2} may be indicated by *uplinkTxSwitchingPeriod2T2T* provided to a BS from the UE through a UE capability report when *uplinkTxSwitching-2T-Mode* is configured through RRC signaling, or may be indicated by *uplinkTxSwitchingPeriod* provided to the BS from the UE through the UE capability report otherwise. Here, the RRC configuration *uplinkTxSwitching* may be provided to the UE in a manner of being included in the configuration on a serving cell, and may include *uplinkTxSwitchingPeriodLocation* indicating whether a location of a UL TX switching period is configured in this UL carrier in the case of inter-band UL CA, SUL, or (NG)EN-DC and *uplinkTxSwitchingCarrier* indicating that the configured carrier is carrier 1 or carrier 2 for dynamic UL Tx Switching. The RRC parameter *uplinkTxSwitching-2T-Mode* indicates that the 2Tx-2Tx switching mode is configured for the inter-band UL CA or SUL, in which the switching gap duration for the triggered UL switching may be the same as a switching time capability value reported for the switching mode. If the RRC parameter *uplinkTxSwitching-2T-Mode* is not provided and *uplinkTxSwitching* is configured, it may be interpreted that 1Tx-2Tx UTS is configured. In this case, there may be a single uplink configured as *uplinkTxSwitching* (or a single uplink band in case of the intra-band).

If the UE has indicated the capability for uplink switching for the band combination, if it is for that band combination configured with an MCG using E-UTRA radio access, with an SCG using NR radio access, or with an uplink CA, or if 2 UL carriers are configured with a higher layer (e.g., RRC) parameter *supplementaryUplink* in a serving cell having two UL carriers, the switching gap may be present under specific conditions. For example, the following tables are excerpt from 3GPP TS 38.214 V17.1.0, which illustrates UTS conditions.

If the uplink switching is triggered for an uplink transmission starting at T₀, which is after T₀-T_{offset}, the UE is not expected to cancel the uplink switching or to trigger any other new uplink switching that occurs before T₀ for any other uplink transmission that is scheduled after T₀-T_{offset}. Here, T_{offset} may be a UE processing procedure time defined for an uplink transmission that triggers the switching (e.g. S5.3, S5.4, S6.2.1, and S6.4 of 3GPP TS 38.214 & S9 of 3GPP TS 38.213). The UE does not expect to perform more than one uplink switching in a slot that is u_{UL} = max (u_{UL,1}, u_{UL,2}), where u_{UL,1} corresponds to a subcarrier spacing of an active UL BWP of one uplink carrier before the switching gap, and U_{UL,2} corresponds to a subcarrier spacing of an active UL BWP of another uplink carrier after the switching gap.

**[Table 6]**

| | | |
|---|---|---|
| 6.1.6.1 Uplink switching for EN-DC | | |
| For a UE indicating a capability for uplink switching with *BandCombination-UplinkTxSwitch* for a band combination, and if it is for that band combination configured with a MCG using E-UTRA radio access and with a SCG using NR radio access (EN-DC), if the UE is configured with uplink switching with parameter *uplinkTxSwitching,* | | |
| | - for the UE configured with *switchedUL* by the parameter *uplinkTxSwitchingOption,* when the UE is to transmit in the uplink based on DCI(s) received before *T*₀ *- T_{offset}* or based on a higher layer configuration(s): | |
| | | - when the UE is to transmit an NR uplink that takes place after an E-UTRA uplink on another uplink carrier then the UE is not expected to transmit for the duration of *N*_{Tx1-Tx2} on any of the two carriers. |
| | | - when the UE is to transmit an E-UTRA uplink that takes place after an NR uplink on another uplink carrier then the UE is not expected to transmit for the duration of *N*_{Tx1-Tx2} on any of the two carriers. |
| | | - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped, |
| | - for the UE configured with *uplinkTxSwitchingOption* set to 'dualUL', when the UE is to transmit in the uplink based on DCI(s) received before *T*₀ *- T_{offset}* or based on a higher layer configuration(s): | |
| | | - when the UE is to transmit an NR two-port uplink that takes place after an E-UTRA uplink on another uplink carrier then the UE is not expected to transmit for the duration of *N*_{Tx1-Tx2} on any of the two carriers. |
| | | - when the UE is to transmit an E-UTRA uplink that takes place after an NR two-port uplink on another uplink carrier then the UE is not expected to transmit for the duration of *N*_{Tx1-Tx2} on any of the two carriers. |
| | | - the UE is not expected to transmit simultaneously a two- port transmission on the NR uplink and the E-UTRA uplink. |
| | - in all other cases the UE is expected to transmit normally all uplink transmissions without interruptions. | |
| | - when the UE is configured with *tdm-PatternConfig* or by *tdm-PatternConfig2* | |
| | | - for the E-UTRA subframes designated as uplink by the configuration, the UE assumes the operation state in which one-port E-UTRA uplink can be transmitted. |
| | | - for the E-UTRA subframes other than the ones designated as uplink by the configuration, the UE assumes the operation state in which two-port NR uplink can be transmitted. |

**[Table 7]**

| | | |
|---|---|---|
| 6.1.6.2 Uplink switching for carrier aggregation | | |
| For a UE indicating a capability for uplink switching with *BandCombination-UplinkTxSwitch* or *uplinkTxSwitchingPeriod2T2T* for a band combination, and if it is for that band combination configured with uplink carrier aggregation: | | |
| | - If the UE is configured with uplink switching with parameter *uplinkTxSwitching,* when the UE is to transmit in the uplink based on DCI(s) received before ***T*₀ *- T_{offset}*** or based on a higher layer configuration(s): | |
| | | - When the UE is to transmit a 2-port transmission on one uplink carrier on one band and if the preceding uplink transmission is a 1-port transmission on another uplink carrier on another band, then the UE is not expected to transmit for the duration of *N*_{Tx1-Tx2} on any of the carriers. |
| | | - When the UE is to transmit a 1-port transmission on one uplink carrier on one band and if the preceding uplink transmission is a 2-port transmission on another uplink carrier on another band, then the UE is not expected to transmit for the duration of *N*_{Tx1-Tx2} on any of the carriers. |
| | | - For the UE configured with *uplinkTxSwitchingOption* set to 'switchedUL', when the UE is to transmit a 1-port transmission on one uplink carrier on one band and if the preceding uplink transmission was a 1-port transmission on another uplink carrier on another band, then the UE is not expected to transmit for the duration of *N*_{Tx1-Tx2} on any of the carriers. |
| | | - For the UE configured with *uplinkTxSwitchingOption* set to 'dualUL', when the UE is to transmit a 2-port transmission on one uplink carrier on one band and if the preceding uplink transmission was a 1-port transmission on a carrier on the same band and the UE is under the operation state in which 2-port transmission cannot be supported in the same band, then the UE is not expected to transmit for the duration of *N*_{Tx1-Tx2} on any of the carriers. |
| | | - For the UE configured with *uplinkTxSwitchingOption* set to 'dualUL', when the UE is to transmit a 1-port transmission on one uplink carrier on one band and if the preceding uplink transmission was a 1-port transmission on another uplink carrier on another band and the UE is under the operation state in which 2-port transmission can be supported on the same uplink carrier, then the UE is not expected to transmit for the duration of *N*_{Tx1-Tx2} on any of the carriers. |
| | | - For the UE configured with *uplinkTxSwitchingOption* set to 'dualUL', if the UE is configured with *OneT* with *uplinkTxSwitching-DualUL-TxState,* when the UE is under the operation state in which 2-port transmission can be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission took place on the transmitting carrier. |
| | | - If *uplinkTxSwitching-2T-Mode* is configured, when the UE is to transmit a 2-port transmission on one uplink carrier on one band and if the preceding uplink transmission is a 2-port transmission on another uplink carrier on another band, then the UE is not expected to transmit for the duration of *N*_{Tx1-Tx2} on any of the carriers. |
| | | - The UE is not expected to be scheduled or configured with uplink transmissions that result in simultaneous transmission on two antenna ports on one uplink carrier on one band, and any transmission on another uplink carrier on another band. |
| | - In all other cases the UE is expected to transmit normally all uplink transmissions without interruptions. | |

**[Table 8]**

| | | |
|---|---|---|
| 6.1.6.3 Uplink switching for supplementary uplink | | |
| For a UE indicating a capability for uplink switching with *BandCombination-UplinkTxSwitch* for a band combination, and if it is for that band combination configured in a serving cell with two uplink carriers with higher layer parameter *supplementaryUplink:* | | |
| | - If the UE is configured with uplink switching with parameter *uplinkTxSwitching,* | |
| | | - If the UE is to transmit any uplink channel or signal on a different uplink on a different band from the preceding transmission occasion based on DCI(s) received before *T*₀ *- T_{offset}* or based on a higher layer configuration(s), then the UE assumes that an uplink switching is triggered in a duration of switching gap ***N*_{Tx1-Tx2}**, where ***T*₀** is the start time of the first symbol of the transmission occasion of the uplink channel or signal and ***T_{offset}*** is the preparation procedure time of the transmission occasion of the uplink channel or signal given in clause 5.3, clause 5.4, clause 6.2.1, clause 6.4 and in clause 9 of [6, TS 38.213], respectively. During the switching gap ***N*_{Tx1-Tx2}**, the UE is not expected to transmit on any of the two uplinks. |
| | - In all other cases the UE is expected to transmit normally all uplink transmissions without interruptions. | |

NR supports a wide range of spectra in various frequency ranges. Owing to the rearrangement of the band originally used in the previous cellular generation network, the availability of the spectrum is expected to increase in the 5G advanced market. In particular, in the case of a low-frequency FR1 band, an available spectrum block tends to be further subdivided and distributed to a narrower bandwidth. In the case of an FR2 band and a partial FR1 band, the available spectrum may be wider, and thus an in-band multi-carrier operation is required. To meet various spectral requirements, it is important to utilize this distributed spectrum band or wider bandwidth spectrum in a more spectrum/power efficient and flexible manner to provide higher throughput and appropriate coverage in a network. In the case of a multi-carrier UL operation, there are several limitations in the current specification. For example, a 2Tx UE may be configured with up to two UL bands that are changeable only by RRC reconfiguration, and UL Tx switching may be performed only between two UL subbands for the 2Tx UE. Instead of RRC-based cell(s) reconfiguration, based on, for example, data traffic, TDD DL/UL configuration, bandwidth, and channel conditions of the respective bands, dynamically selecting carriers with UL Tx switching may potentially lead to higher UL data rate, spectrum utilization, and UE capacity,.

For the higher UL specification data rate, spectrum utilization, and UE capacity, UTS between more than two bands is being considered. Hereinafter, UTS trigger condition(s), UTS related configuration method(s), and/or UTS operation method(s) needed to support UTS between a plurality of bands (e.g. three or more bands) are described according to some implementations of the present disclosure.

Hereinafter, a cell may be interpreted depending on context. For example, a cell may mean a serving cell. In addition, a cell may include one DL Component Carrier (CC) and 0 to 2 UL CCs, but the implementations of the present disclosure to be described below are not limited thereto. Hereinafter, when there is no separate distinction, terms "cell" and "CC" may be used interchangeably. In addition, in some implementations of the present disclosure, a cell/CC may be applied in a manner of being substituted with a (active) BWP in a serving cell. In addition, unless specified otherwise, in the implementations of the present disclosure to be described below, a cell/CC may be used as a concept encompassing PCell, SCell, PsCell, etc., which may be configured/represented in a Carrier Aggregation/Dual Connectivity (CA/DC) scenario.

Hereinafter, "band" refers to a frequency band, and the term "band" may be used interchangeably with the term "carrier" and/or "cell" in the band. In this case, each band may be composed of one carrier or multiple (e.g., two) contiguous (or non-contiguous) carriers. The proposed methods described below may also be applied to inter-band UL CA, intra-band UL CA, NR-DC, EN-DC, (alone) SUL scenario, and band combinations associated therewith (as long as there is no separate constraint).

In the implementations of the present disclosure described below, the following notation is used for convenience of description.
- A case of an occurrence of UTS may be expressed as being UTS-triggered.
- A band (or carrier) associated with UTS: may mean a band/carrier before and after UTS occurrence
- A Tx chain transition time occurring due to UTS is referred to as a UTS gap (or a UTS period). A UL transmission is not performed in a band/carrier associated with the UTS during the UTS gap.
- 1 Tx chain may be expressed as 1T, and 2 Tx chain may be expressed as 2T.
- 1-port UL transmission may be expressed as 1p, and 2-port UL transmission may be expressed as 2p.
- .If 1 Tx chain or 2 Tx chain is connected to a specific band A (and/or carrier(s) belonging to the band A), this state may be expressed as A(1T) and A(2T), respectively.
- If 1 Tx chain is connected to each of two specific band A (and/or carrier(s) belonging to the band A) and band B (and/or carrier(s) belonging to the band A), this state may be expressed as A(1T) + B(1T).
- A UL transmission may mean a random (any) UL channel or UL signal supported by NR and the like.
- "Previous transmission" may mean the most recent UL transmission performed by a corresponding UE before the UTS triggering, and "current transmission" may mean a UL transmission performed by the corresponding UE immediately after the UTS triggering (or simultaneously). In addition, hereinafter, the expression "transmission" may mean "UL transmission".
- An expression that a UL transmission has occurred may mean a UL transmission scheduled through DCI for UL grant and/or a UL transmission (e.g. a configured grant UL transmission) configured through higher layer signaling (e.g. RRC signaling).
- If a 1-port UL transmission occurs on a specific band A (and/or carrier(s) belonging to the band A), it may be expressed as A(1P), and if a 2-port UL transmission occurs, it may be expressed as A(2P).
- When a 1-port UL transmission occurs on each of two specific bands, for example, band A and band B, (and/or carrier (s) belonging to the corresponding band), it may be expressed as A(1p) + B(1p).

Some implementations of the present disclosure described below are described in terms of focus on the occurrence of UTS between two bands in a situation where four bands/carriers are configured (or activated). However, the same method(s) as those of the present disclosure to be described below may be applied to the UTS occurring when a smaller number (e.g., 3) of bands are configured/activated. In addition, the same method(s) as those of the present disclosure, which will be described later, may be applied to UTS occurring in a situation where a larger number (e.g., 5) of bands are configured/activated.

Some implementations of the present disclosure described below are described without distinguishing between 1Tx-2Tx switching or 2Tx-2Tx switching. However, some implementations may be typically applicable to 1Tx-2Tx switching and/or 2Tx-2Tx switching.

In some implementations of the present disclosure described below, occurrence of "simultaneous transmission" in a plurality of bands may mean a case that a start time (e.g., a start symbol) of a UL transmission in each of a plurality of the bands coincides and/or a case that a portion (or all) of a UL transmission resource/period in each of a plurality of the bands overlaps in time.

Some implementations of the present disclosure described below may be applied alone or in combination of at least two of them. For example, each of Implementation 1 to Implementation 6 may be applied alone or in combination of at least two of them.

### * Implementation 1) RRC Configuration for OPTION1 or OPTION2

A UE may be configured such that 1 Tx chain is connected to two specific bands (or (two) bands corresponding to a specific Band Combination (BC)), and whether simultaneous UL transmission is possible in the corresponding two bands may be configured for the UE by RRC (e.g. *uplinkTxSwitchingOption*)*.* The RRC parameter *uplinkTxSwitchingOption* provided to the UE by a BS may indicate which option is configured for dynamic UL Tx Switching for inter-band UL CA or (NG)EN-DC. This RRC parameter is set to *swtichedUL* if the network configures OPTION1, or set to *dualUL* if the network configures OPTION2. When the UE is configured with the corresponding RRC value set to *"switchedUL",* the UE does not expect/perform that 1 Tx chain will be connected to each of the corresponding two bands, or does not expect/perform simultaneous transmissions (indication/configuration) in the corresponding two bands even though 1 Tx chain is connected thereto. Hereinafter, this is expressed as an OPTION1 operation is configured. For example, the UE that is configured with *switchedUL* does not expect that simultaneous transmissions of A(1T) and B (1T) will be indicated/configured, and the BS will not indicate/configure simultaneous transmissions of A(1T) and B (1T) to the UE. If the UE is configured with the corresponding RRC value set to *"dualUL",* the UE may expect to be scheduled/configured with the simultaneous transmissions in the corresponding two bands through the 1 Tx chains connected to the corresponding two bands, respectively (or perform the corresponding simultaneous transmissions), which is expressed in the following description as OPTION2 operation is configured.

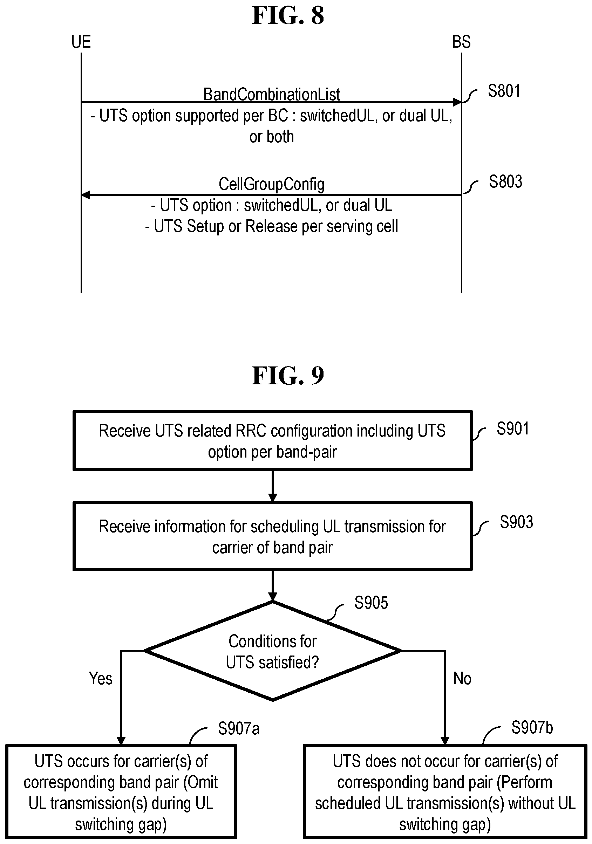

FIG. 8 illustrates an example of a process of configuring uplink transmission switching.

Referring to FIG. 8, in the case of the conventional UTS between two bands, a UE may report capability for OPTION1 or OPTION2 in units of BC and a BS may configure one of them to the UE through RRC. For example, referring to the Rel-7 document of 3GPP TS 38.331, the UE may set a UTS option supported by the UE for the BC to one of {switched, dualUL, both} and report it to the BS (S801). The BS provides the UE with the UTS option (*uplinkTxSwitchingOption*) through the RRC configuration *cellGroupConfig* (S803). That is, according to NR Rel-7, the UTS option is configured in units of cell group.

However, in a UTS operation between 3 bands or 4 bands, if these bands are configured with different BCs and the UE reports the capability of OPTION1 or OPTION2 in units of BC, the BS may need to select whether to set OPTION1 or OPTION2 in units of BC or in units of UE. The BS and/or the UE may operate according to one of the followings.
> Implementation 1-1: A UL switching option may be indicated using a UL grant for scheduling a corresponding transmission.
   >> In this case, if a current transmission is configured by a higher layer (e.g., RRC) (or the current transmission is a configured UL transmission), the UL switching option may be indicated to the UE through a separate DCI. Alternatively, the UL switching option for the configured UL transmission may be defined in advance.
   >> If the UL switching option indicated by the DCI for the current transmission is different from a reported option for the BC including the band of the corresponding transmission, the BS and/or the UE may follow the UL switching option indicated by the DCI or may ignore or drop the corresponding DCI by determining that the capability of the UE is insufficient.
> Implementation 1-2: A UL switching option may be configured through RRC per BC consisting of two bands (i.e., a per-BC configuring method). In other words, a UL switching option may be configured per band-pair.
   >> For example, for all BCs in which UTS may occur (or all BCs for bands configured to the UE), (a table covering all the corresponding BCs is configured) and a UL switching option may be configured/indicated to the UE through higher layer signaling such as an RRC message, a MAC Control Element (CE), and/or the like per BC (corresponding to a current transmission). Alternatively, a row index or code point of this table configured by RRC signaling may be indicated to the UE (e.g., via physical layer signaling (e.g., DCI)). The UE may operate according to the scheduled BC.
      >>> If the number of the configured bands is 3, OPTION1 or OPTION2 may be configured through RRC for three kinds of BCs (each consisting of two bands) (i.e., three different band-pairs), and a UTS operation may be performed according to a UL switching option corresponding to the BC in which a UL transmission occurs. In this case, the actual RRC configuration may have a structure in which OPTION1 or OPTION2 is configured for a combination of two cell groups instead of a combination of two bands (in this case, which cell (s) is included in each cell group may be configured through RRC). Accordingly, OPTION1 or OPTION2 may be configured for three cell group combinations (each consisting of two cell groups).
      >>> If the number of the configured bands is 4, OPTION1/2 is configured for 6 BCs (each consisting of 2 bands) (i.e., 6 different band-pairs) through RRC and a UTS operation may be performed according to a UL switching option corresponding to a BC in which a UL transmission occurs. In this case, the actual RRC configuration may have a structure in which OPTION1 or OPTION 2 is configured for a combination of two cell groups instead of a combination of two bands (in this case, which cell(s) is included in each cell group may be configured through RRC), and accordingly, OPTION1 or OPTION2 may be configured for six cell group combinations (each consisting of two cell groups).
   >> If an uplink switching option for a specific BC is not reported to the BS by the UE, or is not explicitly indicated/configured (or before it is indicated/configured) to the UE by the BS, a default operation for the corresponding operation may be defined/configured.
      >>> In some implementations, an option (e.g. OPTION1 or OPTION2) may be defined/configured in advance as the default operation, or the BS may indicate/configure the default operation to the UE based on a UE's report.
      >>> If the UTS option is configured per cell group as in the example of FIG. 8, the UTS option cannot be differently configured per band-pair. For example, referring to the example of FIG. 8, if cell 1 belonging to band A, cell 2 belonging to band B, cell 3 belonging to band C, and cell 4 belonging to band D belong to the same cell group, only the same UTS option is applied to all six band-pairs that can be formed with four bands. Further, the BS may have to configure a cell group with only cells from band-pair(s) with the same UTS option. Alternatively, the BS may have to configure a cell group with only cells on bands belonging to a BC for which the same UTS option is reported by the UE. When a UTS option is to be configured per cell group, a cell group may need to be configured again through RRC reconfiguration in order to configure different UTS options for different band-pairs. On the contrary, if a UTS option is configured per band-pair according to some implementations of the present disclosure, different UTS options may be configured for different band-pairs without going through RRC reconfiguration, thereby preventing unnecessary RRC reconfiguration. In addition, according to some implementations of the present disclosure, a cell group may be configured with cells belonging to band-pair(s) with different UTS options, thereby increasing system flexibility.
> Implementation 1-3: Only one kind of UL switching option may be configured for all activated bands through RRC (i.e., per-UE configuration method).
   >> A BS may configure OPTION1 for all band(s) in which "OPTION1" exists among option(s) reported per BC for a list of BCs by the UE, and may configure OPTION2 otherwise (i.e., in the case where only "OPTION2" or "both" is reported for all the band(s)).
      >>> In this case, the UE may not expect that simultaneous transmissions on two bands (which are possible for OPTION2) in a BC reported as OPTION1 are configured/scheduled. If the simultaneous transmissions on two bands are configured/scheduled, the UE may drop one (or all) of them. The BS may perform a UL reception on the assumption that the UE will operate as described above.
      >>> Although OPTION1 is configured by RRC according to this method, if a current transmission occurs in a BC capable of OPTION2, the UE may operate in OPTION2 for the corresponding transmission.
      >>> Although OPTION2 is configured by RRC according to this method, if a current transmission occurs in a BC capable of OPTION1, the UE may operate in OPTION1 for the corresponding transmission.
   >> Although OPTION1 or OPTION2 is configured according to this method, an UTS option may be indicated/configured through DCI. In this case, the UTS option indicated/configured through the DCI may be prioritized over an UTS option indicated/configured through RRC signaling. That is, if there is an indication field indicating an UTS option in DCI for a current transmission, the UE and the BS may operate according to a value of the corresponding indication field.
   >> If a UTS option for a specific BC is not reported by the UE or is not explicitly indicated/configured (or before it is indicated/configured) by the BS, a default operation for the corresponding operation may be defined/configured.
   >>> A UTS option (e.g., OPTION1 or OPTION2) may be defined/configured in advance as the default operation, or the BS may indicate/configure the default operation to the UE based on a UE's report.

In some implementations, the dynamic indication method described in Implementation 1-1, Implementation 1-2, and/or Implementation 1-3 (e.g., a method of indicating a UTS option via DCI) may not be applied in NR-DC or EN-DC.

### * Implementation 2) UTS Triggering Due to Priority between UL Transmissions

When UL simultaneous transmissions on three or more bands are scheduled/configured, if a UL transmission on a specific band-pair has a relatively high priority, it may cause UTS triggering. For example, when a state of a UE is A(1T)+B (1T), if A(1p)+B(1p)+C(1p) occurs (i.e., A(1p)+B(1p)+C(1p) is scheduled) and a C(1p) transmission thereof has a high priority, UTS may be triggered. In this case, in some implementations, a priority of the configured/scheduled UL transmission may follow the UL transmission priority rule defined in the conventional NR standard (e.g., when the scheduled UL transmissions overlap in time or only one UL resource is configured, the UL transmission of the higher priority is performed and the UL transmission of the lower priority is dropped). As another example, in a state of A(1T)+B(1T), if a high priority transmission (e.g. DG PUSCH) is scheduled on band A and band C and a low priority transmission (e.g. Periodic SRS (P-SRS)) is scheduled on band B (and transmissions on the bands A, B, and C are scheduled to be performed at the same time), UTS from the band B to the band C may be triggered. In this case, the UE may operate to omit (i.e., drop) the transmission on the band B.

As another method, a priority of a UL transmission scheduled as a current transmission may be determined to minimize occurrences/times of UTS triggering. For example, when A(1p)+B(1p)+C(1p) occurs, UL transmission(s) of one or two bands that may cause no UTS or minimize UTS may be performed according to a current Tx chain state, and another configured/scheduled UL transmission may be dropped. For example, when a state of a UE is A(1T)+B(1T), if A(1p)+B(1p)+C(1p) occurs, the UE may operate to omit/drop C(1p) transmission on a new band.

If start timing points of three or more UL transmissions are slightly different (e.g., if a first symbol of a last UL transmission is before a last symbol of an earliest UL transmission), the following UL transmission may be omitted/dropped.

When UL simultaneous transmissions are scheduled/configured on two bands and a 2p transmission is scheduled on one of them, if a UL transmission on a specific one of the bands has a relatively high priority, it may cause UTS to be triggered. For example, when a state of the UE is A(2T), if A(2p)+B(1p) occurs as a current transmission and a B(1p) transmission has a high priority, UTS may be triggered. In this case, in some implementations, a priority of a configured/scheduled UL transmission may follow the UL transmission priority rule of the conventional NR standard. For example, when a low priority transmission (e.g., SRS) is configured on a band A in A(2T) state and a high priority transmission (e.g., DG PUSCH) is scheduled on a band B, a Tx chain may switch from the band A to the band B, i.e., UTS may be triggered. In this case, the UE may operate to omit/drop the transmission on the band A.

In case of UTS triggering due to a priority between UL transmissions in the cases described above, a different priority rule may be applied per BC. Alternatively, an explicitly preferred band may be configured/indicated to the UE by the BS using RRC/MAC-CE/DCI, etc.

### * Implementation 3) Multiple TAGs and UTS Triggering

Due to propagation delay, a difference between a downlink frame timing and an uplink frame timing may occur. In order to adjust the difference between the downlink frame timing and the uplink frame timing, Timing Advance (TA) by which a UL transmission is performed in advance by a predetermined time relatively to the downlink frame timing is used. Serving cells that have a UL having the same timing advance applied thereto and use the same timing reference cell are grouped into TAG. Each TAG includes at least one serving cell with a configured UL and mapping of each serving cell to the TAG is configured by RRC. In some implementations of the present disclosure, UTS may be performed in consideration of TAG(s) and/or preparation time.

The following tables illustrate PUSCH preparation time for PUSCH credit timing capability 1 (i.e., UE processing capability 1) and PUSCH preparation time for PUSCH timing capability 2 (i.e., UE processing capability 2), respectively. In case of a UE that supports Capability 2 on a given cell, if processing type 2 is enabled for the cell through RRC configuration, a processing time according to the UE processing capability 2 is applied.

**[Table 9]**

| u | **PUSCH preparation time *N*₂ [symbols]** |
|---|---|
| 0 | 10 |
| 1 | 12 |
| 2 | 23 |
| 3 | 36 |
| 5 | 144 |
| 6 | 288 |

**[Table 10]**

| u | **PUSCH preparation time *N*₂ [symbols]** |
|---|---|
| 0 | 5 |
| 1 | 5.5 |
| 2 | 11 for frequency range 1 |

When a current transmission occurs, if a Timing Advance Group (TAG) of the current transmission is different from a TAG of a previous transmission, an additional (processing) time may be required for UTS triggering. For example, when a band A (and a corresponding cell/carrier) belongs to TAG#1, and a band B (and a corresponding cell/carrier) belongs to TAG#2, if UTS between the band A and the band B is triggered, an additional (processing) time may be additionally applied to a preparation time required for the conventional UL transmission. Meanwhile, a situation requiring such an addition time may correspond to a case in which a TA value to be applied to the current transmission is greater than a TA value (over a specific level) applied to the previous transmission.

Alternatively, when simultaneous transmissions occur on two different bands, an additional time may be needed for UTS triggering if these two bands are associated with different TAGs. For example, when the band A (and the corresponding cell/carrier) belongs to the TAG#1 and the band B (and the corresponding cell/carrier) belongs to the TAG#2, if simultaneous transmissions of the band A and the band B are configured/scheduled, an additional time may be additionally applied to a preparation time required for UL transmission of the case in which the conventional UTS is triggered.

In addition, when UTS triggering due to different TAGs described above occurs, a gap/period larger than a UTS gap in the same conventional TAG environment may be necessary. In this case, the corresponding UTS gap may be separately reported as a UE capability or the like. For example, a separate UTS gap may be reported/configured separately by distinguishing a case in which a current transmission occurring band and a previous band belong to the same TAG from a case in which they belong to different TAGs. Alternatively, UTS gaps may be reported/configured separately by distinguishing a case in which TAGs between bands where current transmissions occur are the same and a case in which the TAGs are different.

### * Implementation 4) UTS Triggering Limitation in a Slot

For a UTS operation, to avoid too frequent switching, the following limitations exist in the NR Rel-7 document.

**[Table 11]**

| |
|---|
| The UE does not expect to perform more than one uplink switching in a slot with *u*_{UL} = max(*u*_{UL,1}, u_{UL,2}), where the u_{UL,1} corresponds to the subcarrier spacing of the active UL BWP of one uplink carrier before the switching gap and the *u*_{UL,2} corresponds to the subcarrier spacing of the active UL BWP of the other uplink carrier after the switching gap. |

That is, it is limited so that UTS triggering does not occur two or more times during one slot. Here, when SCSs configured in active UL BWPs of two bands (or carriers) before and after UTS are different, the one slot is based on a slot (i.e., a shorter slot length) based on a larger one of the two SCSs. In method(s) to be described later, 'an SCS configured in an active UL BWP of a carrier belonging to a specific band' is simply expressed as 'an SCS of a specific band', 'an SCS configured on a specific band', 'a band corresponding to a specific SCS', and the like.

If the number of bands/carriers on which a Tx chain for a UL transmission is switchable is k (k > 2), the above limitations may be changed such that UTS does not occur two or more times during a shortest slot length (i.e., a slot length corresponding to a largest SCS) among k bands/carriers, and in this case, the corresponding k bands/carriers may be defined as bands/carriers configured to a UE or may be defined as activated bands/carriers (among the configured bands/carriers) (hereinafter, this is referred to as "Method 4-0"). However, in this case (Method 4-0), frequent UTS on a band/carrier having a small SCS may be caused even in a time interval in which a UL transmission on a band/carrier corresponding to a large SCS does not occur. For example, for a UE configured such that UTS may occur on bands (or carriers) A, B, and C, if 15 kHz is configured to the bands A and B (or SCS for active BWP of carrier(s) in the corresponding band(s)) and 30 kHz is configured to the band C, as described above, if UTS is limited not to occur two or more times based on a slot of 30 kHz, UTS may occur twice within one slot on the band/carrier configured with 15 kHz, which may become a burden of the UE (since the UE performs UTS twice during one slot of 15 kHz even though a UL transmission (and UTS triggering attributed thereto) occurs only on the two bands configured with 15 kHz). To solve this problem, at least one of the following methods may be applied.
> Method 4-1: A UE capability that may be indicative of a band and/or SCS that serves as a reference for a limitation operation in which UTS does not occur two or more times during a corresponding one slot may be introduced. Alternatively, an RRC parameter indicating the corresponding operation may be introduced. For example, a UE having reported {enable} through UE capability signaling may expect that UTS does not occur two or more times during one slot corresponding to a largest SCS among SCS(s) configured in k (e.g., k = 4) bands/carriers (without applying the one slot limitation on the basis of a larger SCS among SCS(s) of the two bands/carriers (i.e., switch-to band, switch-from band) before and after actual UTS occurrence). On the other hand, a UE having reported {disable} through UE capability signaling (or a UE failing to report a corresponding UE capability signal) may apply the one slot limitation based on a largest SCS among SCS(s) of two bands/carriers before and after actual UTS occurrence.
> Method 4-2: A band and/or SCS that is a reference for the one slot limitation may vary by a timer reference. For example, when a UL transmission occurs in a band(s)/carrier(s) corresponding to a 30-kHz SCS among bands configured (and activated) to a UE (and/or UTS due to this is triggered), a timer is set (or reset) to a specific value, and then until the timer expires, the one slot limitation may be applied based on a largest SCS among SCS(s) for k bands configured to the UE. The timer may be decremented by 1 each time in slot unit (corresponding to an SCS corresponding to the occurred UL transmission). If the timer expires (i.e., the value becomes 0), the UE may fall back to the conventional Rel-7 operation (i.e., the one slot limitation of Table 11). Alternatively, if the timer expires, the one slot limitation may be applied based on a smallest SCS (e.g., 15 kHz) among k bands. The specific value used in setting (or resetting) the timer may be defined in advance or configured through signaling such as RRC, etc.
> Method 4-3: When at least one of the k bands/carriers operates based on 15 kHz SCS, an operation in which UTS from a specific band combination to another band combination is triggered may be performed only in units of 15 kHz SCS based slot. In other words, in this case, it may be limited such that the operation of the UTS from the specific band combination to another band combination is not triggered two or more times in one slot based on the 15 kHz SCS. For example, when a band/carrier operating based on a 30 kHz SCS is included in a specific band combination, UTS triggering between bands belonging to the corresponding band combination may be performed one time in each of two 30 kHz SCS based slots included in one slot interval based on 15 kHz SCS (a total of 2 times in the one slot interval based on 15 kHz SCS), but the UTS triggering from the corresponding band combination to another band combination in one slot interval based on the 15 kHz SCS may be limited to be performed once only.

In addition, in order to avoid frequent UTS triggering, the following limitation conditions may be applied when switching to another band other than a based band combination. In this case, the "based band combination" may refer to one or two bands having a Tx chain connected thereto when a specific UL transmission occurs. Alternatively, when a specific UL transmission (i.e., n-th transmission) occurs, it may mean a band on which a previous transmission ((n-1)-th transmission) and a transmission ((n-2))-th transmission) having occurred before the previous transmission have occurred. However, the "based band combination" is not necessarily limited thereto.
> Method 4-A: When a UL transmission on a band other than a "based band combination" occurs, a corresponding current UL transmission is valid only if a transmission timing point of the current UL transmission occurs after a specific time from a transmission timing point of a previous UL transmission (on a different band), whereby UTS may be triggered. If the current UL transmission occurs before the corresponding specific time (on a band different from that of the previous transmission), a UE may ignore/drop the corresponding UL transmission. In this case, the specific time may be defined in advance (e.g. 14 symbols based on 15 kHz SCS) or may be provided to the UE through RRC configuration. For example, in a situation where a TX chain is connected to a band B and a band C, if a UL transmission occurs on a band D after/before 14 symbols based on 15 kHz SCS from a previous transmission on the band B or C, the UE may drop the corresponding transmission and then operate to trigger UTS for the UL transmission that occurred in the band D (to perform the corresponding UL transmission).
> Method 4-B: when a UL transmission on a band other than a "based band combination" occurs, UTS may be triggered only if a current UL transmission is a 2-port UL transmission (on one band). That is, in this case, when the current UL transmission is a 1-port UL transmission (per band for one or more bands), the corresponding UL transmission may be ignored/dropped. For example, in a situation where a TX chain is connected to bands B and C, if a 2p UL transmission occurs on a band D, UTS may be triggered. If a 1p UL transmission occurs on the band D, the corresponding 1p UL transmission may be dropped.
> Method 4-C: when a UL transmission on a band other than a "based band combination" occurs, UTS may be triggered only if a current UL transmission is a 2- or 1-port UL transmission on one band, and in this case, all 2 Tx chains may be switched to the corresponding one band even though it is a 1p UL transmission. That is, in this case, when the current UL transmission is a 1-port UL transmission per band for two bands, the corresponding UL transmission may be ignored/dropped. For example, in a situation where a TX chain is connected to a band B and a band C, if a 1p or 2p transmission occurs on the band B or C (depending on a position of a current TX chain and a port of a current UL transmission), a 1 Tx chain or 2 Tx chains may be switched, but if a UL transmission occurs on the band D, all of the 2 Tx chains may be switched to the band D even when the corresponding transmission is a 1p UL transmission.

### * Implementation 5) When a Band (or a Band Combination) on Which UTS May Occur Is Indicated, an Initial State of a Tx Chain Immediately after the Corresponding Indication

Even if k bands are configured to a UE, a band (or band combination) on which UTS may occur may be indicated or limited by a network. If a UL transmission and a corresponding UTS occurrence are allowed only on a specific band (or band combination) by a network indication, etc., it is necessary to define a state of a Tx chain immediately after the specific band has been configured through the corresponding network indication. An initial state of the TX chain may be determined by the following method (s).
> Method 5-1: It may operate as 2 Tx chains are all connected to a band (or carrier) corresponding to a lowest (or highest) (cell) index among indicated band(s) (or band combination). For example, if a UL transmission and a corresponding UTS occurrence on bands B and C (combination) only are allowed for a UE having bands A, B, C, and D configured thereto through network indication or the like, all 2 Tx chains are connected to a band/carrier having low (or high) indexes (or index(es) of carrier(s) in the corresponding band(s)) in the bands B and C and the UE and BS may operate by assuming a state that a 0 Tx chain is on another band.
> Method 5-2: A UE may operate as 2 Tx chains are all connected to a band/carrier having a smallest (or largest) SCS among indicated band(s) (or band combination). For example, if a UL transmission and a corresponding UTS occurrence on bands B and C (combination) only are allowed for a UE having bands A, B, C, and D configured thereto through network indication or the like, the UE and BS may operate by assuming a state in which all 2 Tx chains are connected to a band/carrier having low (or high) SCS(s) in the bands B and C and a 0 Tx chain is on another band.
> Method 5-3: It may operate by assuming that a Tx chain is connected to each of indicated band(s) (or band combination). For example, if a UL transmission and a corresponding UTS occurrence on bands B and C (combination) only are allowed for a UE having bands A, B, C, and D configured thereto through network indication or the like, the UE and BS may operate by assuming that a state having a 1 Tx chain connected to each of the bands B and C is an initial state.
> Method 5-4: It may operate without assuming an initial state of a Tx chain. In this case, after indication of a network about band(s) or band combination on which UTS may possibly occur, a state of the Tx chain may be determined according to a first UL transmission on the indicated band(s). In this case, UL Tx Switching may not occur.

### * Implementation 6) Method for Indicating Band (or Band Combination) on Which UTS May Occur

A UE having UTS configured thereto may report, to a BS, one of {*switchedUL, dualUL, both*} through a UE capability report (e.g., *uplinkTxSwitching-OptionSupport*) before receiving the configuration of *'switchedUL' or 'dualUL'* through an RRC parameter *'uplinkTxSwitchingOption'.* In some implementations, the report (e.g., *uplinkTxSwitching-OptionSupport*) may be provided in units of band combination (BC). In addition, the UE may report, to the BS, a length of a UL Tx switching period for UL band-pair per BC (e.g., one value of {n35us, n140us, n210us} may be reported through a UE capability signal *uplinkTxSwitchingPeriod*). Furthermore, the UE may report a UE capability signal *uplinkTxSwitching-PowerBoosting* indicating whether a UE supportive of UTS supports 3dB power boosting on a 2p UL transmission, a UE capability signal *uplinkTxSwitching-DL-Interruption* indicating a DL interruption that may occur on a corresponding band during UL Tx switching, a UE capability signal capable of indicating a band-pair on which the UE supports a UL Tx switching operation, and the like all in units of BC.

Band(s) (or band combination) on which UTS may occur may be indicated or limited by a network even if k bands are configured to the UE. In this case, band(s) (or band combination) on which the UTS may occur may be determined based on the UE capability signal of the UE described above. For example, band(s) (or band combination) having the same report value(s) of one (or two or more) of the UE capabilities of the UE described above may be defined as one group, and the BS (or network) may configure/indicate the corresponding group to the UE. Specific examples thereof are as follows. Band(s) (or band combination) on which UTS may occur may be determined using one (or a combination of two or more) of the methods described below, but are non-limited to the following methods.
> Method 6-1: A group of bands having the same UE capability signal *uplinkTxSwitching-OptionSupport* reported per BC may be determined as band(s) (or band combination) on which UTS of a corresponding UE may occur. For example, after band-pairs reported as 'switchedUL' by a UE is defined as group # 1 and band-pairs reported as 'dualUL' by the UE is defined as group #2, if the group #1 or the group #2 is indicated to the UE through an indication of a BS, the UE may expect that, only within the band(s) (or band combination) belonging to the corresponding indicated group, a UL transmission may occur and UTS may be triggered.
> Method 6-2: A group of bands having the same UE capability signal *uplinkTxSwitchingPeriod* reported per BC may be determined as band(s) (or band combination) on which UTS of a corresponding UE may occur. For example, after band-pairs reported as 'n35us' by a UE, band-pairs reported as 'n140us' by the UE, and band-pairs reported as 'n210us' by the UE are defined as group # 1, group #2, and group #3, respectively, if one of the group #1, the group #2, and the group #3 is indicated to the UE through an indication of a BS, the UE may expect that, only within the band(s) (or band combination) belonging to the corresponding indicated group, a UL transmission may occur and UTS may be triggered.
> Method 6-3: A group of bands having the same UE capability signal *uplinkTxSwitching-PowerBoosting* reported per BC may be determined as band(s) (or band combination) on which UTS of a corresponding UE may occur. For example, after band-pairs reported as 'supported' by a UE and other band-pairs configured to the UE are defined as group # 1 and group #2, respectively, if one of the group #1 and the group #2 is indicated to the UE through an indication of a BS, the UE may expect that, only within the band(s) (or band combination) belonging to the corresponding indicated group, a UL transmission may occur and that UTS may be triggered.

In addition, a group of bands having the same or similar value(s) of UE capability signal *uplinkTxSwitching-DL-Interruption, ULTxSwitchingBandPair,* etc. reported per BC may be determined as band(s) (or band combination) on which UTS of a corresponding UE may occur, and a UL transmission and UTS occurrence on the corresponding band may be expected through an indication of a BS.

In more general, a BS may configure a specific number of groups based on band/carrier combinations configured for a UE, and then configure/indicate one of the groups to the UE. The corresponding group may be determined based on a capability report value of the UE. When the BS indicates a group to the UE, an operation mode (and/or a UTS gap, etc.) on triggering UTS within the corresponding group may be indicated together. For example, when bands reported as 'switchedUL' are grouped into one group, an indication of the BS may be configured/indicated together with an index of the corresponding group and a presence or non-presence of simultaneous transmission on the corresponding group (i.e., 'switchtedUL' or 'dualUL'). As another example, when bands reported as 'n35us' are grouped into one group, an indication of the BS may be configured/indicated together with an index of the corresponding group and a UTS gap in the corresponding group. As another example, when bands having UTS gaps reported as different values are grouped into one group, a UTS gap to be applied in the corresponding group may be separately indicated through an indication of the BS, or the BS and the UE may operate based on a largest value among the UTS gap(s) reported for the bands of the corresponding group.

FIG. 9 illustrates a flow of a UL signal transmission in a UE according to some implementations of the present disclosure. In particular, FIG. 9 takes the UTS configuration according to Implementation 1-2 as an example, and Implementation 1-2 may be applied alone or in combination with one or more of Implementation 2 to Implementation 6.

The UE may perform operations according to some implementations of the present disclosure in association with an UL signal transmission. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the UE, the processing device, the computer-readable (non-transitory) storage medium, and/or the computer program product, the operations may include receiving a Radio Resource Control (RRC) configuration including an UL Transmission Switching (UTS) related configuration for a plurality of band-pairs (S901). The RRC configuration may include a UTS option configuration per band-pair for a plurality of the band-pairs. The operations include: receiving a first scheduling information for scheduling a first UL transmission on a first UL carrier in a first band of a first band of a first band-pair among a plurality of the band-pairs; receiving a second scheduling information scheduling a second UL transmission following the first UL transmission on a second UL carrier in a second band of the first band-pair (S903); and based on the UTS option configuration for the first band-pair, the first scheduling information, and the second scheduling information, determining whether conditions for the UTS are met for the first band-pair (S905). If the conditions for the UTS are met for a band-pair, UTS occurs for carrier(s) of the band-pair (S907a). For example, the operations may include, based on the conditions being met for the first band-pair, omitting a UL transmission on the first carrier and the second carrier during an UL switching gap (i.e., a UL switching period) (S907a). In some implementations, the UL switching gap is configured on the first band (or first carrier) or the second band (or second carrier) via RRC signaling. And, if the conditions are met, a UL transmission is omitted during the UL switching gap on the first band/carrier and the second band/carrier. On the other hand, if the conditions for the UTS are not met for a band-pair, the UTS does not occur for carrier(s) of the band-pair (S907b). Accordingly, the UE may perform UL transmission(s) scheduled for the carrier(s) of the corresponding band-pair without the UL switching gap. For example, the operations may include, based on the conditions not being met for the first band-pair, performing the first UL transmission and the second UL transmission without interruption (S907b).

In some implementations, the UTS option configuration per the band-pair may include a first option value or a second option value.

In some implementations, the UE may not be expected to perform UL transmissions simultaneously on bands of a band-pair related to the first option value.

In some implementations, the UE may be allowed to perform UL transmissions simultaneously on bands of a band-pair related to the second option value.

In some implementations, the operations may include: based on the UTS option configuration for the first band-pair having the first option value, determining that the conditions are met, based on the first band and the second band being different from each other.

In some implementations, the operations may include, on the basis that the UTS option configuration for the first band-pair has the second option value, i) based on that the first band and the second band are the same, the first UL transmission is 1-port transmission, the second UL transmission is 2-port transmission, and the UE is in an operation state that the 2-port transmission is not supported on the same band or ii) based on that the first band and the second band are different, the first UL transmission is the 1-port transmission, the second UL transmission is the 1-port transmission, and the UE is in a state that the 2-port transmission is operating on a same carrier, determining that the conditions are met.

In some implementations, the first carrier or the second carrier may include a carrier with a related UTS configuration. For example, the first carrier or the second carrier may include a carrier in which *uplinkTxSwitching* is set up through a serving cell configuration (*ServingCellConfig*) for a corresponding cell.

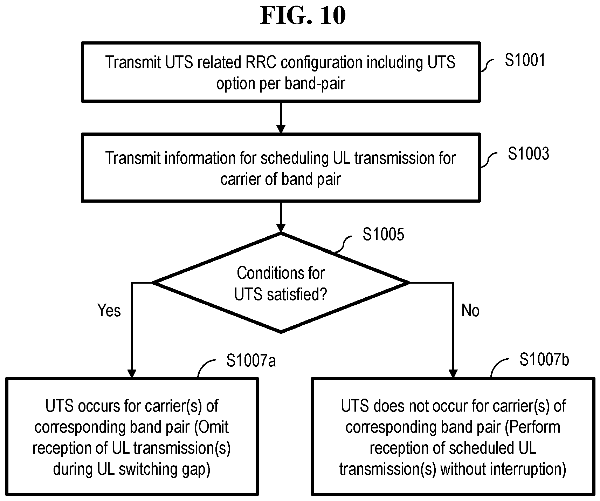

FIG. 10 illustrates a flow of a UL signal reception in a BS according to some implementations of the present disclosure. In particular, FIG. 10 illustrates an example of a UTS configuration according to Implementation 1-2, and Implementation 1-2 may be applied alone or in combination with one or more of Implementation 2 to Implementation 6.

The BS may perform operations according to some implementations of the present disclosure in association with an UL signal reception. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the BS, the processing device, the computer-readable (non-transitory) storage medium, and/or the computer program product, the operations may include transmitting a Radio Resource Control (RRC) configuration including an UL Transmission Switching (UTS) related configuration for a plurality of band-pairs (S1001). The RRC configuration may include a UTS option configuration per band-pair for a plurality of the band-pairs. The operations include: transmitting a first scheduling information for scheduling a first UL transmission on a first UL carrier in a first band of a first band of a first band-pair among a plurality of the band-pairs; transmitting a second scheduling information scheduling a second UL transmission following the first UL transmission on a second UL carrier in a second band of the first band-pair (S1003); and based on the UTS option configuration for the first band-pair, the first scheduling information, and the second scheduling information, determining whether conditions for the UTS are met for the first band-pair (S1005). If the conditions for the UTS are met for a band-pair, UTS occurs for carrier(s) of the band-pair (S1007a). For example, the operations may include, based on the conditions being met for the first band-pair, omitting a reception of a UL transmission from the UE on the first carrier or the second carrier during an UL switching gap (i.e., a UL switching period) (S1007a). In some implementations, the UL switching gap is configured on the first band (or first carrier) or the second band (or second carrier) via RRC signaling. And, if the conditions are met, the BS may operate by assuming that the UE omits a UL transmission during the UL switching gap on the first band/carrier and the second band/carrier. On the other hand, if the conditions for the UTS are not met for a band-pair, the UTS does not occur for carrier(s) of the band-pair (S1007b). Accordingly, the BS may operate by assuming to perform UL transmission(s) scheduled for the carrier(s) of the corresponding band-pair without the UL switching gap. For example, the operations may include, based on the conditions not being met for the first band-pair, receiving the first UL transmission and the second UL transmission without interruption (S1007b).

In some implementations, the UTS option configuration per the band-pair may include a first option value or a second option value.

In some implementations, the BS may not expect to receive UL transmissions simultaneously on bands of a band-pair related to the first option value. The BS may not schedule the simultaneous UL transmissions on the bands of the band-pair related to the first option value.

In some implementations, the BS may be allowed to simultaneously receive UL transmissions on bands of a band-pair related to the second option value. The BS may be allowed to schedule simultaneous UL transmissions on the bands of the band-pair related to the second option value.

In some implementations, the operations may include: based on the UTS option configuration for the first band-pair having the first option value, determining that the conditions are met, based on the first band and the second band being different from each other.

In some implementations, the operations may include, on the basis that the UTS option configuration for the first band-pair has the second option value, i) based on that the first band and the second band are the same, the first UL transmission is 1-port transmission, the second UL transmission is 2-port transmission, and the UE is in an operation state that the 2-port transmission is not supported on a same band or ii) based on that the first band and the second band are different, the first UL transmission is the 1-port transmission, the second UL transmission is the 1-port transmission, and the UE is in a state that the 2-port transmission is operating on a same carrier, determining that the conditions are met.

In some implementations, the first carrier or the second carrier may include a carrier with a related UTS configuration. For example, the first carrier or the second carrier may include a carrier in which *uplinkTxSwitching* is set up through a serving cell configuration (*ServingCellConfig*) for a corresponding cell.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of transmitting an Uplink (UL) signal by a user equipment in a wireless communication system, the method comprising:
receiving a Radio Resource Control (RRC) configuration including a UL transmission switching (UTS) related configuration for a plurality of band-pairs;
receiving a first scheduling information for scheduling a first UL transmission on a first UL carrier in a first band of a first band-pair of a plurality of the band-pairs;
receiving a second scheduling information for scheduling a second UL transmission following the first UL transmission on a second UL carrier in a second band of the first band-pair;
determining whether conditions for UTS are met based on a UTS option configuration for the first band-pair, the first scheduling information, and the second scheduling information;
based on the conditions being met, omitting a UL transmission on the first carrier and the second carrier during a UL switching gap; and
based on the conditions not being met, performing the first UL transmission and the second UL transmission without interruption,
wherein the RRC configuration comprises a UTS option configuration per band-pair for a plurality of the band-pairs.

2. The method of claim 1, wherein the UTS option configuration per the band-pair comprises a first option value or a second option value.

3. The method of claim 2, wherein the user equipment is not expected to perform UL transmissions simultaneously on bands of a band-pair related to the first option value.

4. The method of claim 2, wherein the user equipment is allowed to perform UL transmissions simultaneously on bands of a band-pair related to the second option value.

5. The method of claim 2, comprising:
based on the UTS option configuration for the first band-pair having the first option value:
based on the first band and the second band being different from each other, determining that the conditions are met.

6. The method of claim 2, comprising:
based on the UTS option configuration for the first band-pair having the second option value:
i) based on that the first band and the second band are the same, the first UL transmission is 1-port transmission, the second UL transmission is 2-port transmission, and the user equipment is in an operation state that the 2-port transmission is not supported on the same band, or
ii) based on that the first band and the second band are different, the first UL transmission is the 1-port transmission, the second UL transmission is the 1-port transmission, and the user equipment is in a state that the 2-port transmission is operating on a same carrier,
determining that the conditions are met.

7. The method of claim 1, wherein the first carrier or the second carrier comprises a carrier having a UTS configuration.

8. A user equipment transmitting an Uplink (UL) signal in a wireless communication system, the user equipment comprising:
at least one transceiver;
at least one processor; and
at least one computer memory operably connected to the at least one processor and storing instructions causing the at least one processor to perform operations when executed, the operations comprising:
receiving a Radio Resource Control (RRC) configuration including a UL transmission switching (UTS) related configuration for a plurality of band-pairs;
receiving a first scheduling information for scheduling a first UL transmission on a first UL carrier in a first band of a first band-pair of a plurality of the band-pairs;
receiving a second scheduling information for scheduling a second UL transmission following the first UL transmission on a second UL carrier in a second band of the first band-pair;
determining whether conditions for UTS are met based on a UTS option configuration for the first band-pair, the first scheduling information, and the second scheduling information;
based on the conditions being met, omitting a UL transmission on the first carrier and the second carrier during a UL switching gap; and
based on the conditions not being met, performing the first UL transmission and the second UL transmission without interruption,
wherein the RRC configuration comprises a UTS option configuration per band-pair for a plurality of the band-pairs.

9. An apparatus for processing in a wireless communication system, the apparatus comprising:
at least one processor; and
at least one computer memory operably connected to the at least one processor and storing instructions causing the at least one processor to perform operations when executed, the operations comprising:
receiving a Radio Resource Control (RRC) configuration including a UL transmission switching (UTS) related configuration for a plurality of band-pairs;
receiving a first scheduling information for scheduling a first UL transmission on a first UL carrier in a first band of a first band-pair of a plurality of the band-pairs;
receiving a second scheduling information for scheduling a second UL transmission following the first UL transmission on a second UL carrier in a second band of the first band-pair;
determining whether conditions for UTS are met based on a UTS option configuration for the first band-pair, the first scheduling information, and the second scheduling information;
based on the conditions being met, omitting a UL transmission on the first carrier and the second carrier during a UL switching gap; and
based on the conditions not being met, performing the first UL transmission and the second UL transmission without interruption,
wherein the RRC configuration comprises a UTS option configuration per band-pair for a plurality of the band-pairs.

10. A storage medium readable by a computer, the storage medium storing at least one computer program code including instructions causing at least one processor to perform operations when executed, the operations comprising:
receiving a Radio Resource Control (RRC) configuration including a UL transmission switching (UTS) related configuration for a plurality of band-pairs;
receiving a first scheduling information for scheduling a first UL transmission on a first UL carrier in a first band of a first band-pair of a plurality of the band-pairs;
receiving a second scheduling information for scheduling a second UL transmission following the first UL transmission on a second UL carrier in a second band of the first band-pair;
determining whether conditions for UTS are met based on a UTS option configuration for the first band-pair, the first scheduling information, and the second scheduling information;
based on the conditions being met, omitting a UL transmission on the first carrier and the second carrier during a UL switching gap; and
based on the conditions not being met, performing the first UL transmission and the second UL transmission without interruption,
wherein the RRC configuration comprises a UTS option configuration per band-pair for a plurality of the band-pairs.

11. A method of receiving an Uplink (UL) signal from a user equipment by a base station in a wireless communication system, the method comprising:
transmitting a Radio Resource Control (RRC) configuration including a UL transmission switching (UTS) related configuration for a plurality of band-pairs;
transmitting a first scheduling information for scheduling a first UL transmission on a first UL carrier in a first band of a first band-pair of a plurality of the band-pairs;
transmitting a second scheduling information for scheduling a second UL transmission following the first UL transmission on a second UL carrier in a second band of the first band-pair;
determining whether conditions for UTS are met based on a UTS option configuration for the first band-pair, the first scheduling information, and the second scheduling information;
based on the conditions being met, omitting a reception of a UL transmission on the first carrier and the second carrier during a UL switching gap; and
based on the conditions not being met, receiving the first UL transmission and the second UL transmission without interruption based on the conditions not being met,
wherein the RRC configuration comprises a UTS option configuration per band-pair for a plurality of the band-pairs.

12. A base station receiving an Uplink (UL) signal from a user equipment in a wireless communication system, the base station comprising:
at least one transceiver;
at least one processor; and
at least one computer memory operably connected to the at least one processor and storing instructions causing the at least one processor to perform operations when executed, the operations comprising:
transmitting a Radio Resource Control (RRC) configuration including a UL transmission switching (UTS) related configuration for a plurality of band-pairs;
transmitting a first scheduling information for scheduling a first UL transmission on a first UL carrier in a first band of a first band-pair of a plurality of the band-pairs;
transmitting a second scheduling information for scheduling a second UL transmission following the first UL transmission on a second UL carrier in a second band of the first band-pair;
determining whether conditions for UTS are met based on a UTS option configuration for the first band-pair, the first scheduling information, and the second scheduling information;
based on the conditions being met, omitting a reception of a UL transmission on the first carrier and the second carrier during a UL switching gap; and
based on the conditions not being met, receiving the first UL transmission and the second UL transmission without interruption based on the conditions not being met,
wherein the RRC configuration comprises a UTS option configuration per band-pair for a plurality of the band-pairs.

13. The base station of claim 12, wherein the UTS option configuration per the band-pair comprises a first option value or a second option value.

14. The base station of claim 13, wherein the base station is not expected to receive UL transmissions simultaneously on bands of a band-pair related to the first option value.

15. The base station of claim 13, wherein the base station is allowed to receive UL transmissions simultaneously on bands of a band-pair related to the second option value.

16. The base station of claim 13, wherein the operations comprise:
based on the UTS option configuration for the first band-pair having the first option value:
based on the first band and the second band being different from each other, determining that the conditions are met.

17. The base station of claim 13, wherein the operations comprise:
based on the UTS option configuration for the first band-pair having the second option value:
i) based on that the first band and the second band are the same, the first UL transmission is 1-port transmission, the second UL transmission is 2-port transmission, and the user equipment is in an operation state that the 2-port transmission is not supported on the same band or
ii) based on that the first band and the second band are different, the first UL transmission is the 1-port transmission, the second UL transmission is the 1-port transmission, and the user equipment is in a state that the 2-port transmission is operating on a same carrier,
determining that the conditions are met.

18. The base station of claim 12, wherein the first carrier or the second carrier comprises a carrier having a UTS configuration.
